# DEMANDE DE BREVET EUROPEEN

(11) **EP 4 438 381 A1**
(43) Date de publication de la demande: **02.10.2024**
(21) Numéro de dépôt: 24163467.4
(22) Date de dépôt: 14.03.2024
(51) Int. Cl.: B60L 3/12, B60L 53/14, B60L 53/30, B60L 53/31, B60L 53/37, B60L 53/57, G05D 1/242, G05D 1/243, G05D 1/661, G05D 105/45, G05D 107/00, G05D 109/10, G05D 111/10, G05D 111/20, G05D 111/63, H02J 7/00

(54) **DISPOSITIF AUTONOME POUR LA RECHARGE D'UNE BATTERIE D'UN VEHICULE INCLUANT DES CAPTEURS DE MESURE**

(30) Priorité: 14.03.2023 FR 2302339
(71) Demandeur: Mob-Energy, 69200 Venissieux (FR)
(72) Inventeur: BEN OTHMEN, Habib, 69003 LYON (FR); HADDOUT, Ilyass, 69003 LYON (FR)
(74) Mandataire: Be IP

(57) **Abrégé**

L'invention concerne un dispositif autonome (D) de chargement de batterie comprenant :
- une caméra tridimensionnelle (61) pour l'acquisition d'un couple d'images stéréoscopiques d'une scène située en regard de la paroi avant (51) du dispositif autonome (D), ladite scène incluant le sol (S),
- un système de télémétrie laser (62) orienté vers le sol (S) de la scène située en regard de la paroi avant (51), pour l'acquisition de données représentatives de distances entre le sol et le système de télémétrie,
- une unité de contrôle configurée pour estimer une inclinaison du sol (S) à partir du couple d'images stéréoscopiques et des données acquises par le système de télémétrie laser (62).

## Description

### DOMAINE DE L'INVENTION

La présente invention concerne le domaine technique des dispositifs autonomes permettant de charger/recharger des moyens de stockage d'énergie électrique d'un véhicule comprenant un moteur électrique.

On entend, dans le cadre de la présente invention, par « *moyens de stockage d'énergie électrique* »*,* soit un condensateur (i.e. un système passif comprenant deux électrodes et un isolant), soit un supercondensateur (i.e. un système comprenant au moins deux électrodes, un électrolyte et au moins un séparateur), soit une batterie de type batterie au lithium (i.e. un système comprenant au moins une anode, au moins une cathode et une solution d'électrolyte entre l'anode et la cathode).

Un tel système peut notamment mais non exclusivement être utilisé pour la charge/recharge de moyens de stockage dans un environnement à espace restreint, tel qu'une aire de stationnement composée de stationnements en ouvrage et/ou de stationnements en voirie.

On entend dans le cadre de la présente invention par « *stationnements en ouvrage »,* des stationnements organisés en emplacements délimités dans un espace clos à accès contrôlé, tel qu'un parking aérien, souterrain ou de surface. On entend par « *stationnements en voirie* », des stationnements organisés en emplacements - délimités ou non - dans un espace ouvert payant ou gratuit.

### ARRIERE PLAN DE L'INVENTION

On connait dans l'état de la technique le document US9592742 décrivant un dispositif de forme cubique, motorisé et équipé de divers câbles en sortie, pouvant être déplacé sur un parking jusqu'aux abords d'un véhicule électrique. Ce dispositif permet la recharge d'un véhicule électrique à partir de batteries stockées dans le dispositif. Un inconvénient de cette solution est qu'elle nécessite une intervention humaine afin de brancher le dispositif au véhicule.

On connait aussi le document US9778653 décrivant des méthodes et des systèmes de transfert d'énergie à partir d'un engin autonome sans conducteur, vers un véhicule électrique. Le véhicule électrique fait une demande de recharge, et l'engin autonome sans conducteur le rejoint à un point de rendez-vous, se fixe au véhicule électrique et permet de transférer de l'énergie. Un inconvénient de cette solution est que l'utilisation de drone (comme décrit à la figure 6 de US9778653) pour transporter des batteries pose des problématiques de sécurité. En outre cette solution n'est pas adaptée dans des espaces clos.

On connait aussi du document KR 2020/0037548 une solution de chargement/rechargement de véhicule basé sur l'utilisation d'un robot de chargement/rechargement autonome contenant des batteries, ainsi que d'un boitier d'interfaçage aimanté. Le boitier d'interfaçage comprend une prise de raccordement destinée à recevoir l'une des extrémités d'un câble de connexion électrique, l'autre extrémité du câble étant destinée à être reliée aux moyens de stockage du véhicule à charger/recharger. Le principe de fonctionnement de la solution décrite dans KR 2020/0037548 est le suivant. L'utilisateur place le boitier d'interfaçage aimanté au niveau de la plaque d'immatriculation du véhicule électrique et commande sa recharge. Suite à cette demande, le robot autonome se déplace jusqu'aux abords du véhicule et vient en contact avec le boitier d'interfaçage pour permettre le transfert d'énergie électrique vers les moyens de stockage d'énergie électrique du véhicule. Un inconvénient de la solution décrite dans KR 2020/0037548 est que le robot doit être implanté dans un environnement normalisé - notamment plan et sans obstacles - et n'est pas adapté pour évoluer dans des aires de stationnement existantes.

Un but de la présente invention est de proposer un dispositif autonome de charge/recharge des moyens de stockage d'énergie électrique d'un véhicule pouvant être installé dans des aires de stationnement existantes.

### BREVE DESCRIPTION DE L'INVENTION

A cet effet, l'invention propose un dispositif autonome de chargement de moyens de stockage d'énergie électrique d'un véhicule, le dispositif autonome comprenant :
- un socle mobile incluant des roues motrices pour le déplacement du dispositif autonome sur un sol,
- un châssis monté sur le socle mobile,
- un carénage monté sur le châssis, ledit carénage incluant une paroi avant, une paroi arrière, et deux parois latérales,
- des capteurs de mesure pour l'acquisition de données,
- une unité de contrôle logée dans le châssis pour le traitement des données acquises par les capteurs de mesure, et le pilotage des roues motrices,
***remarquable en ce que*** les capteurs de mesure comportent :
- au moins une caméra tridimensionnelle pour l'acquisition d'au moins un couple d'images stéréoscopiques d'une scène située en regard de la paroi avant du dispositif autonome, ladite scène incluant le sol,
- au moins un système de télémétrie laser orienté vers le sol de la scène située en regard de la paroi avant, pour l'acquisition de données représentatives de distances entre le sol et le système de télémétrie
- l'unité de contrôle étant configurée pour :
   - estimer une première inclinaison du sol de la scène située en regard de la paroi avant à partir du couple d'images stéréoscopiques acquis par la caméra tridimensionnelle,
   - estimer une deuxième inclinaison du sol de la scène située en regard de la paroi avant à partir des données acquises par le système de télémétrie laser,
   - comparer les première et deuxième estimations à une valeur seuil représentative d'une inclinaison limite sur laquelle le dispositif autonome peut circuler,
   - piloter les roues motrices pour interdire le déplacement du dispositif autonome sur le sol de la scène située en regard de la paroi avant si la première estimation et/ou la deuxième estimation est supérieure à la valeur seuil,
   - piloter les roues motrices pour autoriser le déplacement du dispositif autonome sur le sol de la scène située en regard de la paroi avant sinon.

Des aspects préférés mais non limitatifs du dispositif selon l'invention sont les suivants :
- la caméra tridimensionnelle peut être montée sur la paroi avant du carénage ;
- le système de télémétrie laser peut comporter :
   - un émetteur pour l'émission d'au moins un faisceau laser vers le sol de la scène située en regard de la paroi avant, et
   - un récepteur pour l'acquisition des données représentatives de distances entre le sol et le système de télémétrie à partir d'au moins un faisceau laser réfléchi ;
- les capteurs de mesure peuvent comporter deux systèmes de télémétrie laser orientés vers le sol de la scène située en regard de la paroi avant, chaque système de télémétrie étant monté sur une paroi latérale respective du carénage ;
- les capteurs de mesure peuvent comporter en outre :
   - au moins un système LiDAR pour l'acquisition de données représentatives d'au moins un objet d'intérêt,
   - au moins un système odométrique pour l'acquisition de données représentatives d'un déplacement du dispositif autonome,
   l'unité de contrôle étant configurée pour calculer une position courante du dispositif autonome :
   - à partir des données acquises par le système LiDAR, et/ou
   - à partir du couple d'images stéréoscopiques acquis par la caméra tridimensionnelle, et/ou
   - à partir des données acquises par le système odométrique ;
- l'unité de contrôle peut être configurée pour calculer la position courante du dispositif autonome :
   - en déterminant une première position estimée du dispositif autonome à partir des données acquises par le système LiDAR,
   - si les données acquises par le système LiDAR permettent de déterminer la première position estimée, en attribuant la première position estimée à la position courante,
   - sinon :
      ▪ en déterminant une deuxième position estimée du dispositif autonome à partir du couple d'images stéréoscopiques acquis par la caméra tridimensionnelle,
      ▪ en déterminant une troisième position estimée du dispositif autonome à partir des données acquises par le système odométrique, et
      ▪ en attribuant une combinaison des première, deuxième et troisième positions à la position courante ;
- le carénage peut comporter en outre un couvercle pour coiffer une face supérieure du châssis, le système LiDAR étant monté sur le couvercle ;
- le socle mobile peut comporter en outre des roulettes folles, le système odométrique étant associé à une roulette folle ;
- les capteurs de mesure peuvent comporter au moins un système ultrasonore pour l'acquisition de données ultrasonore, l'unité de contrôle étant configurée pour détecter la présence d'un obstacle à proximité du dispositif autonome :
   - à partir du couple d'images stéréoscopiques acquis par la caméra tridimensionnelle, et/ou
   - à partir des données ultrasonores acquises par le système ultrasonore ;
- les capteurs de mesure peuvent comprendre au moins deux systèmes ultrasonores montés sur une paroi latérale respective du carénage, chaque système ultrasonore étant plus proche du socle que du couvercle.

### BREVE DESCRIPTION DES DESSINS

D'autres avantages et caractéristiques du dispositif autonome selon l'invention ressortiront mieux de la description qui va suivre de plusieurs variantes d'exécution, données à titre d'exemples non limitatifs, à partir des dessins annexés sur lesquels :
- La figure 1 est une représentation en perspective du dispositif autonome selon l'invention,
- La figure 2 est une représentation en vue de côté du dispositif autonome de la figure 1,
- La figure 3 est une représentation en vue de face du dispositif autonome de la figure 1,
- La figure 4 est une représentation schématique du dispositif autonome de la figure 1,
- La figure 5 est une représentation schématique d'un exemple d'utilisation du dispositif autonome pour charger/recharger des moyens de stockage d'énergie électrique d'un véhicule comprenant un moteur électrique,
- La figure 6 est une représentation schématique illustrant le principe de fonctionnement d'une caméra tridimensionnelle.

### DESCRIPTION DETAILLEE DE L'INVENTION

On va maintenant décrire différents exemples de réalisation de l'invention en référence aux figures. Dans ces différentes figures, les éléments équivalents sont désignés par la même référence numérique.

Par ailleurs, dans la suite du texte, les termes « *vertical », « horizontal »,* « *dessus* » ou « *sur* », et « *dessous »* ou *« sous »* seront utilisés en référence à un référentiel orthonormé dont l'un des axes est sensiblement parallèle à un axe longitudinal A-A' du dispositif autonome. Cet axe sera considéré comme l'axe vertical dans les exemples décrits.

### 1. Dispositif autonome

### 1.1. Présentation

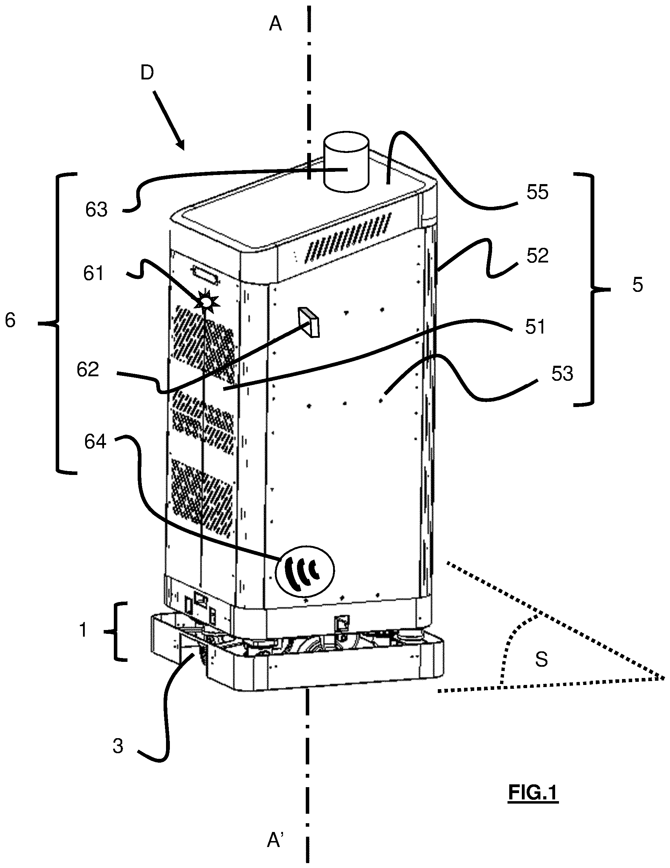

On a illustré à la figure 1 un exemple de dispositif autonome D selon l'invention. Ce dispositif autonome D s'étend longitudinalement vers le haut à partir du sol selon un axe longitudinal A-A'.

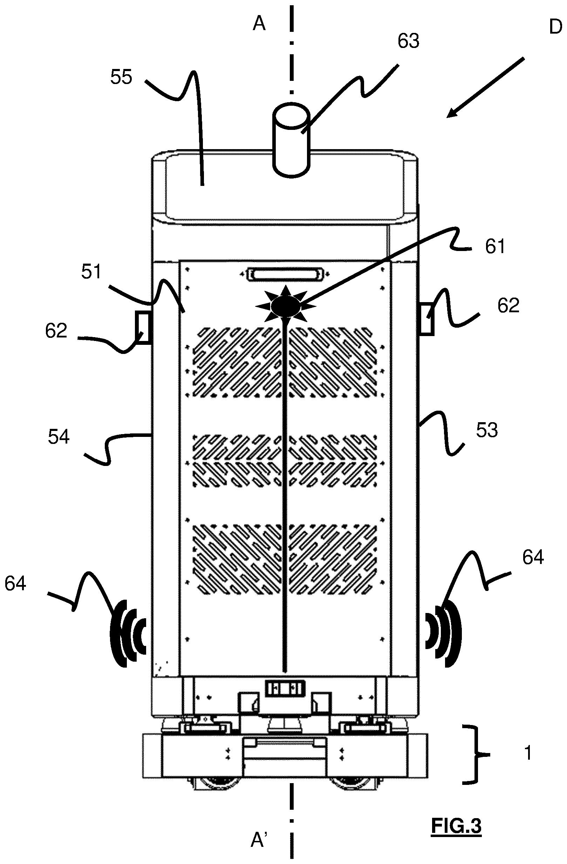

En référence aux figures 1 à 4, le dispositif autonome D comporte :
- un socle mobile 1 intégrant des roues 11 pour le déplacement du dispositif autonome,
- un châssis 2 monté sur le socle mobile 1, le châssis 2 étant configuré pour accueillir différents composants du dispositif autonome, tel que :
   odes batteries 21,
   ∘des convertisseurs de puissance 22,
   ∘un circuit de refroidissement,
   ∘des capteurs de mesure 6, etc.
- un carénage 5 autour du châssis 2, et
- un système de couplage 4 pour permettre de connecter électriquement le dispositif autonome aux moyens de stockage d'énergie électrique d'un véhicule.

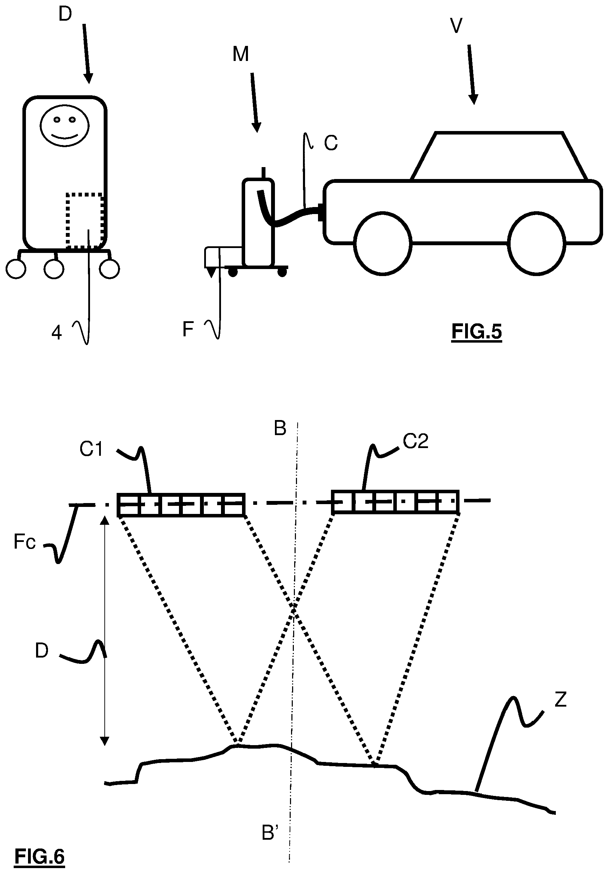

En référence à la figure 5, le dispositif autonome D permet de charger/recharger les moyens de stockage d'un véhicule électrique V par l'intermédiaire d'un module d'accouplement M (élément indépendant) se branchant au véhicule électrique V grâce à un câble C électriquement conducteur (opération exécutée par l'utilisateur du véhicule électrique V), et disposant d'une façade F - incluant une (ou plusieurs) prise(s) électrique(s) - configurée pour s'apparier au système de couplage 4 sans intervention extérieure afin d'assurer le passage - de manière filaire ou par induction - de l'énergie électrique depuis le dispositif autonome D vers le module d'accouplement M. Cette énergie électrique est ensuite transmise aux moyens de stockage du véhicule électrique V par l'intermédiaire du câble C.

Plus précisément, le système de couplage 4 comprend un organe de raccordement électrique 41 apte à se déplacer en translation verticale pour se connecter au module d'accouplement M, comme il sera décrit plus en détails dans la suite.

Le fait que la connexion du dispositif autonome D soit réalisée « *au sol* » via le déplacement en translation verticale d'un organe de raccordement 41 permet de limiter les risques de dégradation du véhicule électrique V, notamment par rapport à une solution autonome de chargement/rechargement basée sur la connexion d'un dispositif de charge/recharge directement avec le véhicule (ou avec un module d'accouplement fixé sur le véhicule).

### 2. Eléments généraux du dispositif

### 2.1. Socle mobile

Le socle mobile 1 peut être du type décrit dans la demande de brevet français FR2100632 déposée au nom de la demanderesse.

Un tel socle mobile 1 comprend un cadre (non représenté) et des roues motrices et folles 11 pour permettre le déplacement du dispositif autonome.

En particulier, le socle mobile 1 comprend deux roues motrices et quatre roulettes folles agencées par triplet, la roue et les deux roulettes de chaque triplet étant alignées le long d'un bord latéral respectif du socle mobile. Une première roulette de chaque triplet est montée à une extrémité du cadre. La roue motrice et la deuxième roulette folle sont quant à elles fixées sur un organe oscillant monté pivotant sur le cadre autour d'un axe de pivotement transversal perpendiculaire aux bords latéraux du socle 1.

Les roues motrices et les roulettes folles sont de préférence des roulettes à bande. Plus précisément, chaque roue/roulette comprend une jante circulaire porteuse et une bande s'étendant autour de la jante. La jante est montée rotative autour d'un moyeu, disposé en son centre et dont la jante est rendue solidaire par des rayons ou une flasque, pleine ou ajourée. Les roulettes folles n'ont pour fonction que le guidage et le support du dispositif autonome D. L'utilisation de roues/roulettes à bande permet de répartir le poids du dispositif autonome D sur une ligne de contact entre la roue/roulette et le sol. On limite ainsi les risques de dégradation de la surface du sol, notamment par rapport à l'utilisation de roues/roulettes sphériques qui induisent un contact ponctuel avec le sol.

Un tel socle mobile 1 qui est connu de FR2100632 ne sera pas décrit plus en détail dans la suite.

### 2.2. Châssis

Le châssis 2 supporte différents composants constituant le dispositif autonome D. Le châssis 2 est réalisé à partir de tubes définissant un squelette pour le dispositif autonome D.

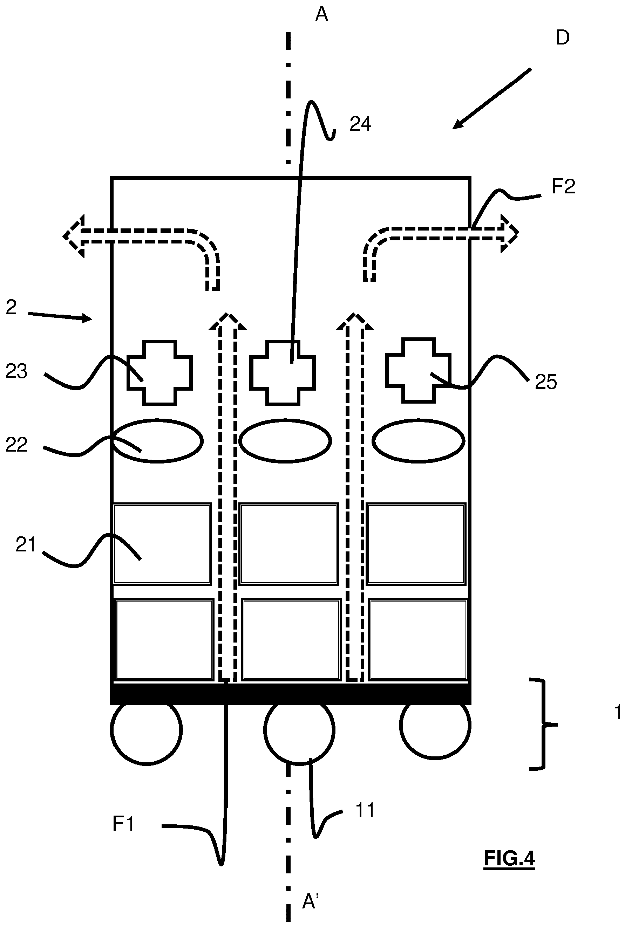

Dans le mode de réalisation illustré à la figure 4, le châssis 2 présente une forme globalement parallélépipédique. Il se compose :
- d'une *« partie inférieure* » destiné à être fixée au socle mobile 1,
- d'une « *partie centrale »* adaptée pour contenir différents composants du dispositif autonome D,
- d'une « *partie supérieure »* opposée à la partie inférieure et correspondant à la *« tête* » du dispositif autonome D.

Le châssis 2 est configuré pour accueillir des batteries de stockage 21 permettant de stocker de l'énergie électrique en vue du chargement/rechargement des moyens de stockage du véhicule V. Ces batteries 21 sont de préférence positionnées dans une partie - dite *« partie basse* » - du châssis 2 la plus proche du sol. En effet, les batteries 21 du dispositif autonome D étant les composants les plus lourds, il est préférable de les positionner à proximité du sol pour optimiser la stabilité du dispositif autonome D.

Le châssis 2 est en outre configuré pour accueillir :
- les convertisseurs de puissance 22 (i.e. convertisseurs AC/DC et DC/AC),
- les capteurs de mesure 6 (qui seront décrits au point 3),
- une unité de contrôle 23 pour le traitement des données acquises par les capteurs de mesure, et le pilotage des composants du dispositif autonome D,
- des mémoires 24 pour le stockage d'informations,
- des moyens de communication 25 pour permettre l'échange d'informations entre le dispositif autonome et un centre de gestion distant,
- le circuit de refroidissement des composants du dispositif autonome D.

Les différents éléments originaux du dispositif autonome D et leurs avantages associés seront décrits plus en détails dans la suite.

### 2.3. Carénage

Le carénage 5 consiste en une ou plusieurs tôles fixées sur le châssis 2 du dispositif autonome D. Le carénage 5 permet d'améliorer l'esthétique du dispositif autonome D en *« habillant »* les composants le constituant. Le carénage 5 permet en outre de protéger des composants des éventuelles agressions extérieures.

Dans le mode de réalisation illustré aux figures 1 à 3, le carénage 5 est composé :
- de quatre panneaux 51, 52, 53, 54 destinés à recouvrir les faces latérales et transversales du châssis 2, et
- d'un couvercle 55 destiné à coiffer la face supérieure du châssis 2.

Les panneaux recouvrant les faces transversales du châssis 2 définissent respectivement une paroi avant 51 et une paroi arrière 52 du dispositif autonome D (relativement à sa direction de déplacement) ; les panneaux recouvrant les faces latérales du châssis 2 définissent des parois latérales 53, 54 du dispositif autonome D.

En référence à la figure 1, le carénage 5 comprend une cavité définissant une niche de réception 3 d'au moins une partie du module d'accouplement M. Cette cavité est avantageusement ménagée dans la paroi avant du dispositif autonome D, le système de couplage 4 étant contenu dans la niche de réception 3.

Ainsi pour établir une connexion avec les moyens de stockage du véhicule V, le dispositif autonome D se déplace jusqu'au module d'accouplement M et s'oriente de sorte à faire partiellement pénétrer le module d'accouplement dans la niche de réception 3 (et en particulier la façade F configurée pour s'apparier au système de couplage 4).

Une fois le module d'accouplement M partiellement logé dans la niche de réception 3, l'unité de contrôle commande le déplacement de l'organe de raccordement 41 pour le connecter électriquement à la façade F du module d'accouplement M.

Le fait de réaliser la connexion électrique dans la niche de réception 3 permet d'augmenter la sécurité du dispositif autonome D en limitant l'accessibilité à l'utilisateur de l'organe de raccordement 41 et de la façade F du module d'accouplement M.

### 2.4. Circuit de refroidissement

Le dispositif autonome D comprend un circuit de refroidissement permettant de limiter l'échauffement de ses composants. En effet, les :
- cartes électroniques,
- batteries 21, et
- convertisseurs de puissance 22 contenus dans le châssis 2,
dissipent une quantité importante de chaleur, provoquant une augmentation significative de leur température. Or, une augmentation trop importante de la température de ces éléments peut engendrer une baisse de leur fiabilité et/ou réduire leur durée de vie.

C'est pourquoi le dispositif autonome D comprend un circuit de refroidissement afin d'évacuer efficacement la chaleur dissipée par ses différents composants.

Le circuit de refroidissement comprend des conduites de circulation de fluide caloporteur disposées dans le châssis 2, entre le socle mobile 1 et le sommet du châssis 2 opposé au socle mobile 1.

Les conduites de circulation peuvent être des tubes souples (par exemple en polyester glycolisé) pour faciliter leur installation dans le châssis entre les différents composants (batteries, convertisseur de puissance, unité de commande, etc.). En variante, les conduites de circulation peuvent être rigides (par exemple en cuivre).

Le fluide caloporteur peut être par exemple une huile, un alcool (comme du méthanol, de l'éthanol ou du glycol), un composé organique (comme de l'acétone, de l'ammoniac), un mélange, un nanofluide, un métal liquide, de l'eau déminéralisée ou tout type de fluide caloporteur connu de l'homme du métier.

Le circuit de refroidissement comprend également une zone d'admission d'air frais F1 positionnée au niveau de la partie inférieure du châssis 2 (i.e. au niveau du socle mobile 1), et une zone d'évacuation d'air chaud F2 positionnée au niveau de la partie supérieure du châssis 2 (i.e. au niveau d'extrémité du châssis opposée au socle mobile 1). La zone d'admission d'air frais F1 peut comprendre un (ou plusieurs) filtre(s) pour limiter les risques d'introduction de poussières dans le dispositif autonome. De même, la zone d'évacuation d'air chaud F2 peut comprendre un (ou plusieurs) filtre(s) pour limiter le rejet d'impuretés vers l'extérieur du dispositif autonome D.

Le fait de récupérer l'air frais dans la partie inférieure du châssis 2 et d'évacuer l'air chaud dans la partie supérieure du châssis 2 permet d'améliorer le refroidissement du dispositif autonome D, l'air chaud ayant tendance à se concentrer à une altitude supérieure à l'air frais.

Bien entendu, le circuit de refroidissement peut comprendre d'autres éléments, tels qu'un (ou plusieurs) échangeur(s) de chaleur, un (ou plusieurs) ventilateur(s), etc.

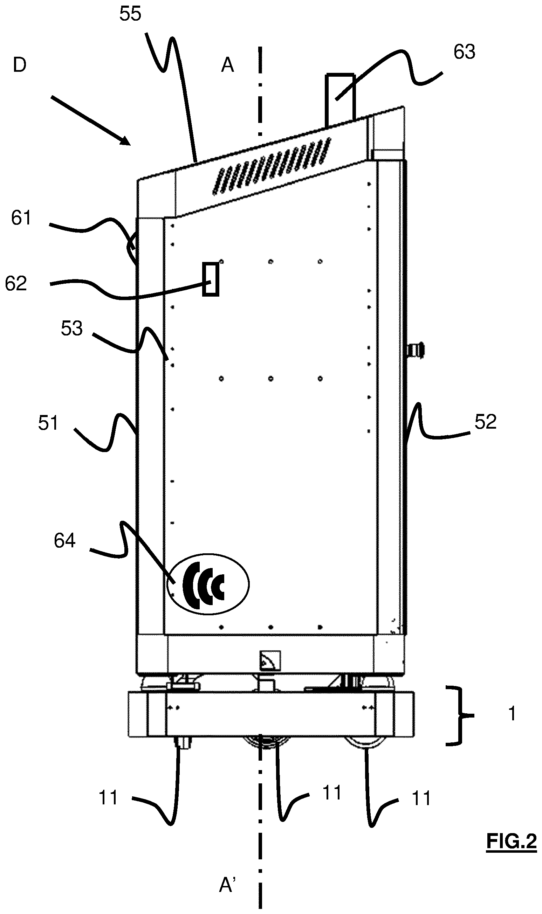

En variante, les zones d'admission d'air F1 et d'évacuation d'air F2 peuvent être ménagées chacune dans des panneaux parallèles respectifs du carénage 5. Plus précisément :
- la zone d'admission d'air F1 peut consister en des ouvertures traversantes ménagées dans les parois avant 51 et arrière 52 du carénage,
- la zone d'évacuation d'air F2 peut consister en des ouvertures traversantes ménagées dans des deuxièmes panneaux parallèles (perpendiculaires aux premiers panneaux latéraux) définissant des flancs du dispositif autonome D relativement à sa direction de déplacement (cf. figure 2).

### 3. Capteurs de mesure

### 3.1. Présentation générale

Le dispositif autonome D comprend différents types de capteurs de mesure coopérant avec l'unité de contrôle 23 pour :
- la détection d'une inclinaison du sol,
- la détection de la position courante du dispositif autonome D,
- la détection d'obstacle.

En ce qui concerne la détection de l'inclinaison du sol, on rappelle ici que le dispositif autonome D peut présenter :
- un poids de plus de 450 kilogrammes,
- une hauteur comprise entre 1 mètre et 2 mètres,
- une emprise au sol pouvant varier entre 50 cm² et 2 m².

Un tel dispositif autonome D n'est donc pas adapté au franchissement de tout type d'inclinaison. Plus précisément, au-delà d'une certaine pente, il y'a un risque pour le dispositif autonome D bascule (vers l'avant dans le cas d'une pente descendante ou vers l'arrière dans le cas d'une pente ascendante). Il est donc nécessaire d'estimer l'inclinaison du sol S et de la comparer à une valeur seuil prédéterminée pour vérifier que cette inclinaison du sol n'est pas supérieure à une pente limite que le dispositif autonome est apte à franchir. Ceci permet au dispositif autonome D de vérifier s'il peut circuler sur un sol incliné d'une certaine pente avant de s'engager sur ce sol incliné.

En ce qui concerne la détection de la position courante du dispositif autonome D, on rappelle que lorsque :
- le module d'accouplement M a été branché par l'utilisateur aux moyens de stockage d'énergie électrique du véhicule V, et que
- l'utilisateur a commandé la recharge des moyens de stockage de son véhicule auprès d'un service de gestion du dispositif autonome,
le dispositif autonome D doit se déplacer d'une position initiale jusqu'au module d'accouplement M pour se connecter à celui-ci afin de recharger les moyens de stockage d'énergie électrique du véhicule. Il est donc nécessaire au dispositif autonome D de calculer sa position courante à intervalles de temps réguliers pour définir un chemin de déplacement (i.e. itinéraire) entre sa position et la position du module d'accouplement M.

Enfin, en ce qui concerne la détection d'obstacle, on rappelle que le dispositif autonome D étant apte à se déplacer sans intervention humaine, il est nécessaire qu'il détecte les éventuels obstacles présents sur son chemin de déplacement, notamment pour les éviter.

L'unité de contrôle 23 est configurée pour :
- commander aux différents capteurs l'acquisition de données de mesure, pour
- traiter les données mesurées par les différents capteurs de mesure (afin de détecter l'inclinaison du sol, d'estimer la position du dispositif autonome, de détecter d'éventuels obstacles, etc.), pour
- calculer le chemin de déplacement du dispositif autonome,
- piloter différents composants et organes du dispositif autonome D tels que le socle mobile 1 (et en particulier les roues motrices 11), les convertisseurs de puissance 22, les moyens de communication 25, le circuit de refroidissement, le système de couplage 4, etc.

L'unité de contrôle 23 peut être composée d'une (ou plusieurs) station(s) de travail, et/ou d'un (ou plusieurs) ordinateur(s) ou peut être de tout autre type connu de l'homme du métier. L'unité de contrôle 23 peut par exemple comprendre un téléphone portable, une tablette électronique (tel qu'un IPAD^{®}), un assistant personnel (ou « PDA », sigle de l'expression anglo-saxonne « Personal Digital Assistant »), un (ou plusieurs) microcontrôleur(s), et/ou tout type de calculateur(s) connu(s) de l'homme du métier (composant(s) programmable(s) de type FPGA, etc.).

Dans tous les cas, l'unité de contrôle 23 comprend un processeur programmé pour permettre le traitement des données acquises par les capteurs de mesure 6, et le pilotage des composants du dispositif autonome D.

### 3.2. Eléments de détection de pente

En ce qui concerne la détection de l'inclinaison du sol S, le dispositif autonome D comprend :
- une (ou plusieurs) caméra(s) 61, notamment une (ou plusieurs) caméra(s) tridimensionnelle (3D) pour l'acquisition d'images, et
- au moins un (notamment deux) système de télémétrie laser 62 pour la mesure ponctuelle d'une distance à partir d'un faisceau laser réfléchi.

L'unité de contrôle 23 est adaptée pour estimer l'inclinaison du sol S à partir des données acquises par la caméra 61 et le système de télémétrie laser 62. Pour ce faire, la caméra 61 et le système de télémétrie 62 communiquent avec l'unité de contrôle 23 (pour la transmission des données mesurées et la réception de données de commande).

Avantageusement, la caméra 61 et le système de télémétrie laser 62 peuvent être orientés de sorte à mesurer les données représentatives de l'inclinaison du sol S dans la direction de déplacement du dispositif autonome D. Ceci permet à l'unité de contrôle 23 d'estimer l'inclinaison du sol, avant que le dispositif autonome D ne se déplace sur un sol incliné.

### 3.2.1. Caméra 3D

La caméra 61 peut être un appareil stéréoscopique comprenant deux capteurs placés côte à côte de manière solidaire dans un même boîtier pour l'acquisition d'un couple d'images stéréoscopiques dont le traitement permet la restitution d'un relief.

La stéréoscopie est un procédé connu de l'homme du métier et donnant l'impression de relief à partir d'un couple d'images 2D (ou deux dimensions) représentant une scène ayant été acquise avec des points de vue différents.

Tel qu'illustré à la figure 6, deux images formant un couple stéréoscopique d'images sont acquises à l'aide de deux capteurs C1, C2 - par exemple des capteurs CCD (Charge Couple Device) (matrices ou barrettes) - situés dans un même plan focal Fc et symétriques par rapport à un axe B-B' passant par un centre de la scène z observée et perpendiculaire au plan focal Fc. Ces capteurs C1, C2 permettent l'acquisition de deux images de la scène observée située à une certaine distance D des capteurs C1, C2. Du fait de l'écartement entre les capteurs C1, C2 qui les ont acquises, ces deux images ne sont pas sans relation. Ainsi, une scène verra ses images décalées d'une image du couple à l'autre. Ce décalage est appelé disparité. En supposant que les capteurs ont des axes optiques parallèles, alors cette disparité est inversement proportionnelle à la profondeur.

Plus précisément, la différence des positions dans des première et deuxième images d'un couple d'images stéréoscopiques, de la projection d'un même point de l'espace 3D, s'appelle la disparité. La recherche (i.e. appariement) des points correspondants (i.e. homologues radiométriques) entre les première et deuxième images, permet de produire une image de disparité. Dans cette image de disparité :
ola position de chaque point correspond à la position d'un point de la première image, et
ola valeur de chaque point représente l'écart de position entre le point de la première image et son homologue radiométrique dans la deuxième image.

Les approches pour construire l'image de disparité à partir d'un couple d'images stéréoscopiques sont classifiées en méthodes éparses et denses. Dans les méthodes éparses les images droite et gauche sont d'abord prétraitées pour extraire des indices visuels discriminants (points d'intérêt ou segments). Ce sont ces indices qui sont appariés et reconstruits. Dans le cas des méthodes denses, les pixels sont tous appariés en exploitant une mesure de ressemblance (telle qu'une corrélation).

Dans le cadre de la présente invention, la caméra 3D 61 comprend deux capteurs montés côte-à-côte sur la paroi avant 51 du carénage 5. Ces capteurs sont configurés pour acquérir des images stéréoscopiques de l'environnement faisant face à la paroi avant 51 du dispositif autonome D, et donc notamment du sol situé en regard de la paroi avant 51 du dispositif autonome D.

A partir d'une paire d'images stéréoscopiques acquises par lesdits capteurs, l'unité de contrôle 23 est apte - en mettant en oeuvre un procédé de traitement d'images stéréoscopiques (basé sur une méthode éparse ou dense) - à reconstruire les coordonnées 3D des points de la scène observée, et notamment du sol situé en regard de la paroi avant 51 du dispositif autonome D. Ceci permet à l'unité de contrôle 23 d'estimer l'inclinaison du sol sur lequel le dispositif autonome D est amené à circuler.

### 3.2.2. Système de télémétrie laser

La télémétrie laser combine un système électronique pour la mesure ponctuelle de distance à partir d'un faisceau laser réfléchi par le sol, et un mécanisme de déviation du faisceau émis et de balayage pour acquérir des coupes ou des images de distance dans une région d'intérêt quelconque.

La lumière réfléchie par le sol dans l'axe du tir revient vers le capteur et est perçue par un récepteur ; la distance capteur-sol est obtenue de manière classique par le temps de vol d'une impulsion laser, ou par le déphasage d'un signal modulé en amplitude ou en fréquence. Tous les impacts laser sont dans un plan si le balayage est seulement en azimut, ou sont dans l'espace 3D si le balayage est en site et azimut.

Le système de télémétrie laser 62 peut-être de tout type connu de l'homme du métier, tel que le télémètre décrit dans le document WO 2017/089006.

Dans le mode de réalisation illustré aux figure 1 à 3, le dispositif autonome D comprend deux systèmes de télémétrie laser 62 montés chacun sur une paroi latérale 53, 54 respective du carénage 5. Ceci permet d'acquérir des données représentatives de l'inclinaison du sol sur toute la largeur du dispositif autonome D.

L'unité de contrôle 23 est configurée pour estimer l'inclinaison du sol sur lequel le dispositif autonome D est amené à circuler à partir des données mesurées par les systèmes de télémétrie laser 62.

### 3.2.3. Avantages

La combinaison de plusieurs familles de capteurs distincts pour l'acquisition de données représentatives de la pente du sol permet de disposer de données de mesure redondantes/complémentaires pour l'estimation de l'inclinaison du sol par l'unité de contrôle 23.

En outre, la combinaison de plusieurs types de capteurs distincts permet une détection de l'inclinaison du sol dans des conditions d'usage très variées, souvent extrêmes. Notamment, le système de télémétrie laser 62, par exemple, peut être utilisé tant dans une pièce plongée dans l'obscurité, qu'en extérieur en présence d'un soleil intense.

Avantageusement, si l'inclinaison du sol estimée par l'unité de contrôle 23 à partir des données issues de l'un des capteurs (c'est-à-dire par la caméra 61 ou par l'un des systèmes de télémétrie laser 62) est supérieure à la valeur seuil prédéterminée, alors l'unité de contrôle 23 interdit au dispositif autonome D d'emprunter un chemin passant par ledit sol incliné. Dans ce cas, l'unité de contrôle 23 calcule un nouvel itinéraire permettant d'éviter la portion du sol dont l'inclinaison est estimée comme étant trop importante.

Ainsi, les données issues des différents capteurs ne sont pas hiérarchisées (i.e. les données de mesure issues de la caméra 61 sont considérées comme étant de fiabilité équivalente à celles issues du système de télémétrie laser 62).

Ceci permet d'augmenter la robustesse du dispositif autonome D en réduisant au maximum les risques de basculement de celui-ci.

En effet, même si un (ou plusieurs) des capteurs de mesure (caméra 61 ou système(s) de télémétrie laser 62) est (sont) perturbé(s) par l'environnement extérieur pour l'acquisition des données représentatives de l'inclinaison du sol, un autre (ou les autres) capteur(s) peut (peuvent) fournir des données à l'unité de contrôle 23 pour l'estimation de cette inclinaison du sol.

Comme les deux familles de capteurs de mesure sélectionnées :
- sont localisées à des positions différentes sur le dispositif autonome D, et
- sont basées sur des technologies différentes, la caméra 61 étant un capteur passif (i.e. uniquement récepteur) tandis que le système de télémétrie 62 est un capteur actif (à la fois émetteur et récepteur), le risque pour que les deux familles de capteurs soient simultanément dans l'incapacité d'acquérir des données représentatives de l'inclinaison du sol est réduit.

### 3.3. Eléments de détection de position

En ce qui concerne le calcul de sa position courante, le dispositif autonome D comprend :
- un (ou plusieurs) système(s) LiDAR 63 (de l'anglais « *Light Detection And Ranging* » ou « *Laser Détection And Ranging* ») pour la détection d'objets d'intérêt,
- la (ou les) caméra(s) 61, et
- un (ou plusieurs) système(s) odométrique(s) pour la mesure d'un déplacement des roues du dispositif autonome D.

L'unité de contrôle 23 est adaptée pour estimer la position du dispositif autonome D à partir des données acquises par le (ou les) système(s) LiDAR 63, et/ou la caméra 61, et/ou le (ou les) système(s) odométrique(s). Pour ce faire, le (ou les) système(s) LiDAR 63, la caméra 61, et le (ou les) système(s) odométrique(s) communiquent avec l'unité de contrôle 23 (pour la transmission des données mesurées et la réception de données de commande).

Comme indiqué précédemment, la caméra 61 est orientée dans la direction de déplacement du dispositif autonome D de sorte à acquérir des images de l'environnement situé en regard de la paroi avant 51 du dispositif autonome D.

Le (ou les) système(s) LiDAR est (sont) disposé(s) sur le dispositif autonome D de sorte à mesurer des données représentatives de la position courante du dispositif autonome D dans toutes les directions (360° autour du dispositif autonome D).

Le(s) système(s) odométrique(s) est (sont) logé(s) dans le socle 1 et est (sont) associé(s)) l'une (ou à plusieurs) des roulettes/roues du dispositif autonome D.

### 3.3.1. Système LiDAR

Le système LiDAR 63 est un système optoélectronique composé d'un émetteur laser, d'un récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique.

Un tel système LiDAR 63 permet de détecter la présence d'objets (poteau/marqueur disposé dans une aire de stationnement d'ouvrage sous-terrain, de surface ou aérien, etc.) situés dans le faisceau lumineux émis par l'émetteur, et de mesurer la distance entre le système LIDAR et chaque objet détecté.

Le système LiDAR 63 permet ainsi d'obtenir une cartographie tridimensionnelle (dite 3D) d'au moins une partie de l'environnement extérieur du dispositif autonome D. Chaque objet détecté est représenté par un nuage de points (chaque point correspondant à un point de l'objet recevant un rayon lumineux émis par le système LiDAR 63 et réfléchissant au moins en partie ce rayon lumineux), le nuage de points représentant l'enveloppe (ou une partie de l'enveloppe) de l'objet détecté tel que vu par le système LiDAR 63 et in fine par le dispositif autonome D.

Dans le mode de réalisation illustré aux figures 1 à 3, le système LiDAR 63 est monté sur le couvercle 55 du dispositif autonome D. Ceci permet au système LiDAR 63 d'acquérir des données représentatives d'un objet d'intérêt dans toutes les directions (360°) autour du dispositif autonome D. On limite ainsi le nombre de système LiDAR nécessaires pour cartographier l'environnement tout autour du dispositif autonome D, et donc le coût de fabrication dudit dispositif autonome.

L'unité de contrôle 23 est configurée pour estimer la position du dispositif autonome à partir des données mesurées par le système LiDAR.

Un des avantages du système LiDAR est que les données recueillies peuvent être rassemblées rapidement avec une extrême précision, grâce aux très courtes durées d'impulsion. De plus, les données de surface ont une densité d'échantillonnage plus forte. Une densité d'échantillonnage élevée améliore les résultats dans certaines applications telles que la détection de la position courante du dispositif autonome D.

### 3.3.2. Caméra

Comme indiqué précédemment, la caméra 61 est montée sur la paroi avant 51 du carénage 5. Elle comprend deux capteurs adaptés pour acquérir un couple d'images stéréoscopiques de l'environnement faisant face à la paroi avant 51 du dispositif autonome D.

L'unité de contrôle 23 est configurée pour recevoir les couples d'images stéréoscopiques acquis par la caméra 61 et à les traiter pour reconstruire les coordonnées 3D des points de l'environnement observé situé en regard de la paroi avant 51 du dispositif autonome D. Ceci permet à l'unité de contrôle 23 d'estimer la position courante du dispositif autonome D à partir des images acquises par la caméra 61.

### 3.3.3. Système odométrique

L'odométrie est une technique permettant d'estimer la position d'un objet à partir de son mouvement. L'odométrie repose sur la mesure individuelle des déplacements des roues pour reconstituer le mouvement global du dispositif autonome D. En partant d'une position initiale connue et en intégrant les déplacements mesurés, l'unité de contrôle 23 est apte à calculer à chaque instant la position courante du dispositif autonome D.

Le système odométrique comporte un (ou plusieurs) senseur(s) odométrique(s) associé (chacun) avec une roue ou une roulette (respective) du dispositif autonome D. Ce (ou chaque) senseur odométrique est configuré pour mesurer une distance odométrique qui est représentative de la distance parcourue par la bande de roulement de la roue ou de la roulette avec laquelle il est associé.

Chaque senseur odométrique peut être associé à une roulette folle, non soumise à un couple moteur. Ainsi, les distances mesurées par chaque senseur odométrique ne peuvent être faussées par un éventuel patinage ou glissement de la roue motrice ou par d'éventuels jeux dans la transmission entre le moteur et cette roue motrice.

En variante (ou en combinaison), chaque senseur (ou certains senseurs) peut (peuvent) être associé(s) à une (aux) roue(s) motrice(s). Ceci permet de prendre en compte les éventuels mouvement(s) de rotation du dispositif autonome D sur lui-même dans l'estimation de la position courante du dispositif autonome.

Différents types de systèmes odométriques peuvent être utilisés. De tels systèmes odométriques étant connus de l'homme du métier, ils ne seront pas décrits plus en détail dans la suite.

A partir des données mesurées par le système odométrique, l'unité de contrôle 23 est apte à estimer la position courante du dispositif autonome D.

### 3.3.4. Avantages

La combinaison de plusieurs familles de capteurs distincts permet de disposer de données de mesure complémentaires pour l'estimation de la position du dispositif autonome D par l'unité de contrôle 23.

En effet, comme indiqué précédemment, le système LiDAR 63 est un capteur de mesure très fiable permettant à l'unité de contrôle 23 de calculer avec précision la position courante du dispositif autonome D.

Toutefois, selon les conditions météorologiques (pluie, brouillard, fumée, neige) le système LiDAR 63 peut être dans l'incapacité d'acquérir des données pertinentes.

Par ailleurs, dans certaines situations, il peut y avoir des ambiguïtés dans l'estimation de la position du dispositif autonome D à partir des données acquises par le système LiDAR 63.

Par exemple, si l'aire de stationnement présente une symétrie axiale, l'estimation réalisée par l'unité de contrôle 23 peut aboutir à deux positions estimées possibles pour le dispositif autonome D.

De même, dans l'hypothèse où l'aire de stationnement est pourvue de marqueurs facilitant l'estimation de la position par l'unité de contrôle 23 à partir des données acquises par le système LiDAR 63, mais que ces marqueurs sont masqués (par exemple par un véhicule), alors l'estimation réalisée par l'unité de contrôle 23 peut aboutir à plusieurs positions estimées possibles pour le dispositif autonome D.

C'est pourquoi la caméra 61 et le système de mesure par odométrie sont utilisés. Ces familles de capteurs permettent en effet de disposer de données de mesure complémentaires pour le calcul de la position courante du dispositif autonome D.

Même si la caméra 61 ne permet que d'imager l'environnement faisant face à la paroi avant 51 du dispositif autonome D, les données issues de la caméra 61 peuvent permettre à l'unité de contrôle 23 de lever une ambiguïté dans la position du dispositif autonome D estimée à partir des données issues du système LiDAR 63.

Par ailleurs, même si l'estimation de la position du dispositif autonome D à partir des données issues du système odométrique est moins précise que les positions estimées à partir des données issues du système LiDAR ou de la caméra 61, la prise en compte des données issues du système odométrique peut également permettre de lever une ambiguïté dans l'estimation de la position obtenue à partir des données issues du système LiDAR ou de la caméra 61.

Comme la précision dans l'estimation de la position du dispositif autonome D varie en fonction des données utilisées, leur utilisation est hiérarchisée par l'unité de contrôle 23.

Notamment, et comme indiqué précédemment, les données issues du système LiDAR 63 permettent une estimation plus précise de la position du dispositif autonome D que les données issues de la caméra 61 ou du système odométrique.

De même, les données issues de la caméra 61 permettent une estimation plus précise de la position du dispositif autonome D que les données issues du système odométrique.

C'est pourquoi, pour le calcul d'une position courante du dispositif autonome D, l'unité de contrôle 23 utilise :
- uniquement les données issues du système LiDAR 63 si celles-ci permettent de déterminer une position estimée unique pour le dispositif autonome D,
- les données issues du système LiDAR 63 et de la caméra 61 si celle-ci permettent de déterminer un position estimée unique pour le dispositif autonome D,
- les données issues du système LiDAR 63, de la caméra 61 et du système odométrique sinon.

Une telle hiérarchisation dans le traitement des données acquises par les différents capteurs permet de limiter la quantité de données à traiter par l'unité de contrôle 23, et donc d'augmenter la vitesse de calcul de la position courante du dispositif autonome D.

### 3.4. Eléments de détection d'obstacle

En ce qui concerne la détection d'obstacles, le dispositif autonome D comprend :
- la (ou les) caméra(s) 61 pour l'acquisition d'images permettant la détection d'un obstacle,
- un (ou plusieurs) système(s) ultrasonore(s) 64 pour l'acquisition de données ultrasonores permettant la détection d'un obstacle.

L'unité de contrôle 23 est adaptée pour traiter les données acquises par la caméra 61 d'une part, et par le système ultrasonore 64 d'autre part afin de détecter la présence d'un (ou plusieurs) obstacle(s) à proximité du dispositif autonome D. Pour ce faire, la caméra 61, et le (ou les) système(s) ultrasonore(s) 64 communiquent avec l'unité de contrôle 23 (pour la transmission des données mesurées et la réception de données de commande).

La caméra 61 est orientée de sorte à acquérir un couple d'images stéréoscopiques d'une scène située en regard de la paroi avant 51 du dispositif autonome D, ladite scène incluant le sol S.

Le (ou les) système(s) ultrasonore 64 est (sont) disposés sur le dispositif autonome D de sorte à mesurer des données représentatives de la présence d'un obstacle autour du dispositif autonome D.

La caméra 61 ayant été présentée précédemment, ses caractéristiques ne seront pas décrites à nouveau dans la suite.

### 3.4.1. Système ultrasonore

Le(s) système(s) ultrasonore(s) comprend (comprennent) des capteurs à ultrasons prévus au niveau du bord inférieur du dispositif autonome D, à proximité du socle 1.

On privilégie les capteurs à ultrasons pour assurer une détection précise et fiable des obstacles à une faible distance du dispositif autonome D.

Pour assurer un repérage satisfaisant les capteurs à ultrasons sont montés sur les parois latérales 53, 54 du carénage 5, et sont plus proche du socles 1 que du couvercle 55.

Avantageusement, les capteurs à ultrasons sont décalés vers l'avant par rapport à l'axe de rotation des roues motrices 11. Cette configuration permet de privilégier le repérage vers l'avant du dispositif autonome D. Dans tous les cas, les capteurs sont affleurants avec les éléments de carrosserie afin de ne pas perturber les ondes émises ou reçues.

### 4. Conclusions

Le dispositif autonome D décrit précédemment permet de charger/recharger les moyens de stockage d'énergie d'un véhicule V en toute sécurité.

Le lecteur aura compris que de nombreuses modifications peuvent être apportées à l'invention décrite précédemment sans sortir matériellement des nouveaux enseignements et des avantages décrits ici.

## Revendications

1. Dispositif autonome (D) de chargement de moyens de stockage d'énergie électrique d'un véhicule (V), le dispositif autonome (D) comprenant :
- un socle mobile (1) incluant des roues motrices (11) pour le déplacement du dispositif autonome (D) sur un sol (S),
- un châssis (2) monté sur le socle mobile (1),
- un carénage (5) monté sur le châssis (2), ledit carénage (5) incluant une paroi avant (51), une paroi arrière (52), et deux parois latérales (53, 54),
- des capteurs de mesure (6) pour l'acquisition de données,
- une unité de contrôle (23) logée dans le châssis (2) pour le traitement des données acquises par les capteurs de mesure (6), et le pilotage des roues motrices (11),
***caractérisé en ce que*** les capteurs de mesure (6) comportent :
- au moins une caméra tridimensionnelle (61) pour l'acquisition d'au moins un couple d'images stéréoscopiques d'une scène située en regard de la paroi avant (51) du dispositif autonome (D), ladite scène incluant le sol (S),
- au moins un système de télémétrie laser (62) orienté vers le sol (S) de la scène située en regard de la paroi avant (51), pour l'acquisition de données représentatives de distances entre le sol et le système de télémétrie
l'unité de contrôle (23) étant configurée pour :
∘estimer une première inclinaison du sol (S) de la scène située en regard de la paroi avant (51) à partir du couple d'images stéréoscopiques acquis par la caméra tridimensionnelle (61),
∘estimer une deuxième inclinaison du sol (S) de la scène située en regard de la paroi avant (51) à partir des données acquises par le système de télémétrie laser (62),
∘comparer les première et deuxième estimations à une valeur seuil représentative d'une inclinaison limite sur laquelle le dispositif autonome peut circuler,
∘piloter les roues motrices (11) pour interdire le déplacement du dispositif autonome sur le sol (S) de la scène située en regard de la paroi avant (51) si la première estimation et/ou la deuxième estimation est supérieure à la valeur seuil,
- piloter les roues motrices (11) pour autoriser le déplacement du dispositif autonome sur le sol (S) de la scène située en regard de la paroi avant (51) sinon.

2. Dispositif autonome selon la revendication 1, *dans lequel* la caméra tridimensionnelle est montée sur la paroi avant du carénage.

3. Dispositif autonome selon l'une quelconque des revendications 1 ou 2, *dans lequel* le système de télémétrie laser (62) comporte :
- un émetteur pour l'émission d'au moins un faisceau laser vers le sol (S) de la scène située en regard de la paroi avant (51), et
- un récepteur pour l'acquisition des données représentatives de distances entre le sol et le système de télémétrie à partir d'au moins un faisceau laser réfléchi.

4. Dispositif autonome selon l'une quelconque des revendications 1 à 3, ***dans lequel*** les capteurs de mesure (6) comportent deux systèmes de télémétrie laser (62) orientés vers le sol (S) de la scène située en regard de la paroi avant (51), chaque système de télémétrie étant monté sur une paroi latérale (53, 54) respective du carénage (5).

5. Dispositif autonome selon l'une quelconque des revendications 1 à 4, ***dans lequel*** les capteurs de mesure (6) comportent en outre :
- au moins un système LiDAR (63) pour l'acquisition de données représentatives d'au moins un objet d'intérêt,
- au moins un système odométrique pour l'acquisition de données représentatives d'un déplacement du dispositif autonome (D),
l'unité de contrôle (23) étant configurée pour calculer une position courante du dispositif autonome :
- à partir des données acquises par le système LiDAR, et/ou
- à partir du couple d'images stéréoscopiques acquis par la caméra tridimensionnelle (61), et/ou
- à partir des données acquises par le système odométrique.

6. Dispositif autonome selon la revendication 5, dans lequel l'unité de contrôle est configurée pour calculer la position courante du dispositif autonome (D) :
- en déterminant une première position estimée du dispositif autonome à partir des données acquises par le système LiDAR,
- si les données acquises par le système LiDAR permettent de déterminer la première position estimée, en attribuant la première position estimée à la position courante,
- sinon :
oen déterminant une deuxième position estimée du dispositif autonome (D) à partir du couple d'images stéréoscopiques acquis par la caméra tridimensionnelle (61),
oen déterminant une troisième position estimée du dispositif autonome (D) à partir des données acquises par le système odométrique, et
oen attribuant une combinaison des première, deuxième et troisième positions à la position courante.

7. Dispositif autonome selon l'une quelconque des revendications 5 ou 6, ***dans lequel*** le carénage (5) comporte en outre un couvercle (55) pour coiffer une face supérieure du châssis (2), le système LiDAR (63) étant monté sur le couvercle (55).

8. Dispositif autonome selon l'une quelconque des revendications 5 à 7, ***dans lequel*** le socle mobile (1) comporte en outre des roulettes folles (11), le système odométrique étant associé à une roulette folle (11).

9. Dispositif autonome selon l'une quelconque des revendications 1 à 8, ***dans lequel*** les capteurs de mesure (6) comportent au moins un système ultrasonore pour l'acquisition de données ultrasonore, l'unité de contrôle (23) étant configurée pour détecter la présence d'un obstacle à proximité du dispositif autonome (D) :
- à partir du couple d'images stéréoscopiques acquis par la caméra tridimensionnelle (61), et/ou
- à partir des données ultrasonores acquises par le système ultrasonore.

10. Dispositif autonome selon la revendication 9, dans lequel les capteurs de mesure comprennent au moins deux systèmes ultrasonores montés sur une paroi latérale (53, 54) respective du carénage (5), chaque système ultrasonore étant plus proche du socle (1) que du couvercle (55).
